# EUROPEAN PATENT APPLICATION

(11) **EP 1 473 241 A1**
(43) Date of publication of application: **03.11.2004**
(21) Application number: 03425280.9
(22) Date of filing: 30.04.2003
(51) Int. Cl.: B65D 39/00

(54) **Cork closure for bottles and corresponding production method**

(71) Applicant: Vintec S.r.l, 20154 Milano (IT)
(72) Inventor: Casini, Roberto, 20145 Milano (IT); Tagliapietra, Francesco, 36022 Cassola (Vicenza) (IT)
(74) Representative: Petruzziello, Aldo

(57) **Abstract**

A bottle closure (1;100;200) includes a body (2;102;202) which is substantially cylindrical in shape, made from natural cork, to the base of which is coupled, by means of injection moulding, one disc-shaped element (3;103;203) made from synthetic materials with low gas permeability and low compression set; the disc-shaped element (3;103;203) providing a perimetric lateral edge (30;130;230) which encloses the perimetric edge of the base of said cork body (2;102;202).

## Description

The present invention refers to a cork bottle closure, in particular for wine or alcoholic beverage bottles and a production method for such a cork closure.

The main types of closures used for sealing of beverages, in particular wine and high-proof drinks, are the following:
- natural cork closures manufactured according to various productive processes (single piece corks, two piece corks, twin top, single top, agglomerates).
- Sintered closures made from cork powder and synthetic glues.
- Closures made from synthetic materials, in particular thermoplastic resins.

Natural bark cork closures are known to present problems connected to the natural origin of the raw material, such as:
a. modification of the taste of wine due to the moulds contained in the closures or the residue (peroxides, chlorates) from the washes to which they are subjected;
b. difference in ageing from one bottle of wine to another due to the different elasticity of the closures;
c. breakage of closures during extraction with fragments of cork falling into the wine;
d. increasing difficulty in finding the raw material.

Sintered closures, since they are made of cork powder, solve problems b) and c) but do not help with problems a) and d).

Synthetic closures solve all four problems but, because of the materials and the technologies currently in use, the solution of the problems is limited to a period of less than two years, the time in which a synthetic sealing retains its elastic qualities in an unaltered way.

If the problem of sealing young wine is solved, there is still the problem of finding a sealing system which can guarantee absence of wine taint, sealing integrity and uniform ageing for wines whose shelf life is longer than 24 months: practically all quality wines.

A closure must satisfy various requisites during the various stages of its life. In the following table some of the requisites are shown for a closure during those stages.

| STAGES | REQUISITES |
|---|---|
| Bottling | 1. Easy insertion into bottle neck |
| | 2. Immediate seal against gas and liquids |
| Storage | 3. Barrier to ingoing and outgoing gases and liquids |
| | 4. No alteration of wine's organoleptic characteristics |
| | 5. No absorption of aromas from wine |
| | 6. Constant performance over time |
| Extraction | 7. Easy introduction of cork screw |
| | 8. Easy extraction from bottle neck |
| | 9. Physical integrity of the seal |

Natural cork closures only partially solve the requisites according to points 2, 4, 9.

Sintered cork closures only partially satisfy the requisites according to point 4.

Synthetic cork closures also just partially satisfy the requisites according to points 3, 5, 6.

These drawbacks are solved, at least in part, in the PCT application patent, publication number WO 00/34140, in which a closure is described with a disc made of silicon material applied to the lower base of the cork body to improve seal against liquids and gases.

In another embodiment shown in document WO 00/34140 a closure is described which includes a cork body with two silicon discs applied to the two bases of the body by means of moulding or gluing with adhesives.

The diameter of the silicon discs is less than the diameter of the bases of the cork body and as a consequence the silicon discs only partially cover both bases of the body, leaving a sharp edge on the peripheral edge of the bases of the body. This might lead to some inconveniences:
- Problems with the closure seal. During insertion of the closure into the neck of the bottle, the sharp edge of the perimetric edge of the bases of the body can fold over, forming a flap which jeopardises the perfect adhesion between glass and closure. In any case, after insertion of the cork into the bottle neck, only the profile of the peripheral edge of the disc comes into contact with the glass separating the wine from the cork. This might not always ensure a perfect isolation between wine and the natural bark cork, with possible cessions of undesired aromas to the same wine.
- Risk of the silicon disc detaching. During the compression of the closure for its insertion into the bottle neck, the silicon disc is subject to a high shear stress that might provoke its detachment from the cork body.
- Risk of inefficient insulation of the cork body. This risk is caused by the possibility that parts of the peripheral edge of the bases of the body remain uncovered from their silicon covering, above all in the case of nipping of the silicon disc by the corking machine jaws.

From this explanation it is evident how, with the current production processes, the problem of storing alcoholic and high proof beverages is only partially solved by the closures currently available on the market.

The aim of the present invention is to eliminate the drawbacks of the prior art providing a cork closure for sealing bottles which guarantees an efficient seal against gases and liquids contained in the bottle.

Another aim of the present invention is to provide such a closure which can prevent any alteration of the organoleptic characteristics of the wine.

A further aim of the present invention is to provide such a closure that can guarantee a high physical integrity of its construction during the operations of corking and extraction.

Yet another aim of the present invention is to provide such a closure that guarantees the possibility of keeping bottled wine in optimum conditions for a long period of time even when stored upright.

Another aim of the present invention is to provide a method for production of a cork bottle closure which is practical, economic, easy to make and which allows the corks to be produced in a continuous automated way.

These aims are achieved in accordance with the invention, with the characteristics listed in the enclosed independent claims 1 and 9.

Advantageous embodiments of the invention are apparent in the dependent claims.

The sealing or closure according to the invention consist of a cork body on which is fixed, by means of an injection moulding process, one disc of synthetic material on one base. The peculiarity of the invention is the fact that this synthetic material disc totally covers the perimetric edge of the base of the cork body.

The cork body undergoes one or more mechanical processes so as to guarantee gripping of the synthetic material and the total coverage of the side surface of the base of the cork body. In particular on the side surface of the base of the cork body some material is removed to create a ring housing for gripping for the perimetric edge of the synthetic material disc.

In this way, one base of the cork body has an external diameter which is less than the central part of the cork body. As a consequence the synthetic material disc has an external diameter which is more than the diameter of the base on which it is applied and is equal to the external diameter of the central part of the cork body.

Moreover the external surface of the synthetic material disc is basically flat or convex and its perimetric edge does not have a sharp edge, rather it is slightly rounded or smoothed.

Polymers are used for the synthetic material disc, such as thermoplastic elastomers, plastomers and plastics characterised by low gases and vapour permeability and low compression set, which guarantees a high radial force, that lasts over time, allowing a strong seal against gases and liquids in the glass/closure interface.

Such a closure presents the following advantages compared to traditional cork closures:
- Immediate seal against gases and liquids thanks to the rapid recovery of the initial volume of the synthetic material disc.
- No modification of the organoleptic characteristics of the wine thanks to total insulation of the bark cork from the wine, due to the presence of the synthetic material disc. The risks of cession from the cork of fast oxidations for the presence of residuals of treatment of the cork are thereby eliminated.
- High physical integrity of the seal thanks to the fact that the synthetic disc does not allow fragments of cork to fall into the wine, as is often the case with traditional natural cork closures.
- High barrier against gases and low absorption of aromas, therefore a prolonged ability of keeping wines in optimum conditions over the years. In fact this type of seal combines the low permeability of the bark cork, of which the body is made, with the high neutrality and high elasticity of the base of synthetic material which comes into contact with the wine. The closure as according to the invention eliminates therefore any phenomena of transfer which is typical of natural cork with the use of the synthetic base and at the same time guarantees a low permeability of the body which synthetic closures have not been able to do so far.

Moreover the closure according to the invention, with the synthetic material disc which have a rounded perimetric edge that encircles the perimetric edge of the base of the cork body, has more than one advantage compared to closures according to the prior art:
- The rounded edge of the disc of the closure according to the invention allows it to be inserted better at the time of corking.
- There is no risk of the disc coming off during insertion of the closure because a large amount of the pressure of the closure is released on to the side surface of the disc.
- Elimination of the risk of contact between wine and cork since the perimetric edge of the disc has a sufficient thickness so as to avoid any deterioration, such as that caused by the jaws of the corking machine.
- More structural compactness of the closure thanks to the side hooking system of the synthetic material of the disc which is anchored to the side surface of the bases of the closure body. In this way the use of adhesive material for fixing the disc is completely avoided.
- Elimination of leakage phenomena since the elastic recovery of the synthetic material of the disc is immediate and acts on a larger contact surface of the glass compared to the closures with discs of the prior art.

Further characteristics of the invention will be made clearer by the detailed description that follows, referring to a purely exemplary and non-limiting embodiments thereof, illustrated in the appended drawings, in which:
Fig 1 is a perspective view of a closure according to a first realisation of the invention, in which the closure is shown turned over;
Fig. 2 is an axial sectional view taken along sectional plane II-II in Fig. 1, in which a disc-shaped element of the closure is shown in exploded view;
Fig. 3 is a cross sectional view taken along sectional plane III-III in Fig. 1;
Figures 4A - 4C are three diagrammatic views, the first in view ante the other two in axial sectional view, showing three stages of the production process of a closure according to the invention;
Figures 5 is an axial sectional view showing a closure assembled according to a second embodiment of the invention;
Figures 6 is an axial sectional view showing an assembled closure according to a third embodiment, like as the closure in Fig. 2, with the difference that a synthetic disk is applied on both bases of the closure respectively.

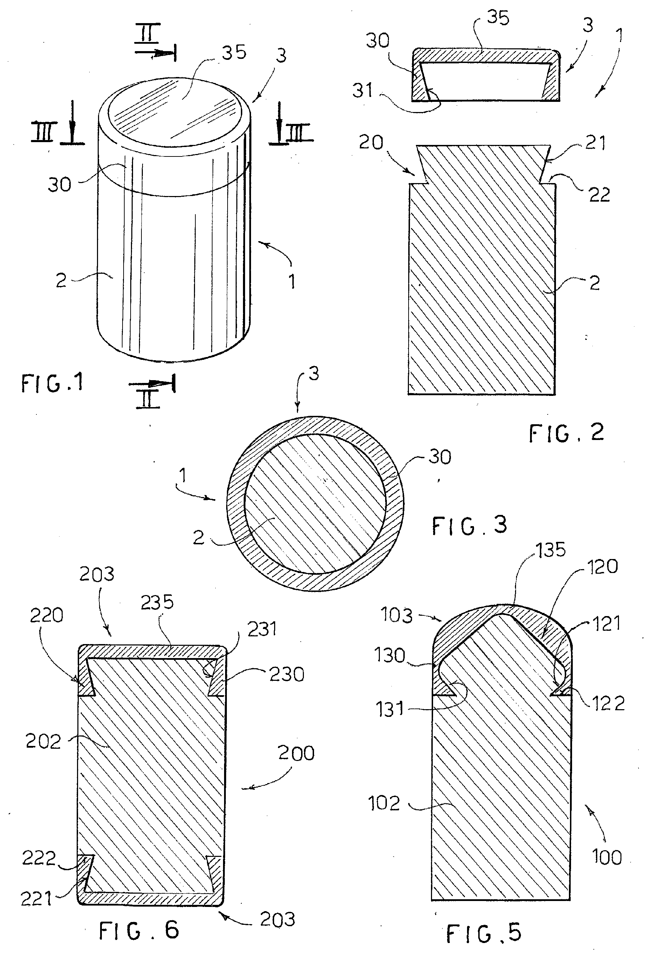

With the help of the figures, the closure according to the invention is described. With reference in particular to Figures 1 - 3, now a first embodiment of the closure according to the invention is described, designated overall with its reference number 1.

The closure 1 comprises a body 2 in natural bark cork. The body 2 has a substantially cylindrical shape, with an external diameter that is larger than the internal diameter of a standard type bottle neck.

A synthetic material disc 3 is fixed on one base of the body 2. The synthetic material disc 3 is preferably coupled to the cork body 2 by means of moulding. On one base of the body 2 mechanical processes are carried out to allow gripping of the disc 3 and the covering of the side edges of the base of the body 2 by means of the synthetic material of the disc 3.

On the side edge of one of the bases of the body 2 a chipping process is carried out, so that a ring housing 20 is made, delimited by a tapered perimetric profile 21 with a decreasing diameter from the end of the body 2 to the centre of the body 2 and a radial profile 22 which is basically at right angle to the axis of the body 2.

In this way, the base of the cork body has an external diameter which is less than the external diameter of the central part of the cork body.

As a result, the disc 3 comprises a top surface 35 turned towards the outside, which is basically flat, with slightly smoothed peripheral edges and a surface turned towards the inside with a protruding part which is intended to engage the housing 20 formed in the bases of the body 2.

Consequently, the disc 3 has a first perimetric protrusion 30 with a ring shape and an internal surface 31 which is basically tapered. The perimetric protrusion 30 of the disc is engaged in the perimetric housing 20 of the base of the body. In this way the gripping of the discs 3 and the covering of the side edges of the base of the body 2 are guaranteed.

It must be observed that the perimetric protrusion 30 of the disc 3 completely encircles the base of the cork body 2. In this way, when the closure 1 is inserted into the bottle neck, the entire external side surface of the perimeter protrusion 30 of the disc 3 comes into contact with the glass of the bottle neck.

The perimetric protrusion 30 can be up to 10 mm high. As a consequence, when the closure 1 is inside the bottle neck, a sufficient amount of the perimetric protrusion 30 of the disc comes into contact with the glass, ensuring a perfect seal to liquids.

In Fig. 5, a closure 100 according to a second embodiment of the invention is shown. The closure 100 has a cork body 102. A perimetric housing 120 is provided on the side surface of one of the two base of the body 102. The perimetric housing 120 is delimited by a convex profile.

With reference to Figure 5, from top to down, the diameter of the convex profile of the perimetric housing 120 increases up to a maximum value and then decreases down to a radial surface 122 of the cork body. In this way, an annular cavity 121 is defined between the decreasing part of said profile and the radial surface 122. In any case, the maximum diameter of said profile of the housing 120 of the cork body is however smaller than the external diameter of the body of the closure 100.

A synthetic material disc 103 is provided to disposed on the housing 120 of the base of the cork body. The disc 103 provides a annular perimetric protrusion 130 ending in a inside radial protrusion 131 intended to be disposed on the radial surface 122 of the cork body 102.

The disc 103 provides a slightly convex external surface 135 in order to guarantee an easier introduction of the closure 100 into the bottle neck. On the other hand the inner surface of the disc 103 is slightly concave and complementary to the housing 120 and to the annular cavity 121 of the base of the cork body.

In Fig. 6 a closure 200 a according to a third embodiment of the invention is shown, wherein elements like or correspondent to those described in the first embodiment are designed by the same reference numbers increased of 200 and therefore detailed description thereof is omitted.

The closures 200 of the third embodiment comprises a cork body 202 and two synthetic material discs 203, substantially similar to the disc 3 disclosed in the first embodiment. The discs 203 are dispose on the two bases of the body, respectively.

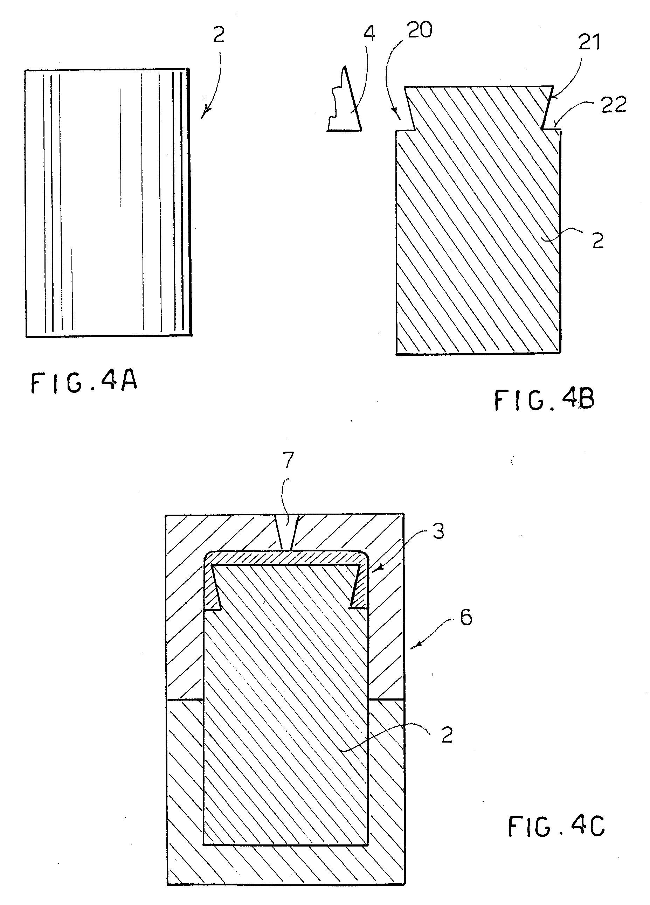

In reference to Figures 4A - 4C there follows a description of the production process of the closure 1 according to the first embodiment of the invention.

As shown in Fig. 4A, the body 2 of the closure 1 is obtained by starting with a cylinder of natural bark cork with the size of a traditional cork.

As shown in Fig. 4B, the cork cylinder 2 is processed using a grinding wheel 4, whose profile coincides with the profile of the first perimetric ring housing 20. In this way the body 2 is obtained with one ring housings 20 disposed on the perimetric edges of the base and delimited between a perimetric tapered profile 21 and a radial profile 22.

As shown in Fig. 4C, successively, the cylindrical cork body 2 is inserted, by means of robot, into a multi or mono-cavity mould 6. The synthetic material is injected, through a injection hole 7, inside the mould 6 and covers one of the two faces of the cork body 2.

The synthetic material can be a composite material consisting of expanded materials as well as non expanded materials. In the case of expanded materials there is a better gripping to the cork body 2.

For synthetic materials polymers can be used, such as thermoplastic elastomers, plastomers and plastics with low compression set, which guarantee a high radial force, long lasting, giving a high seal against liquids and gases in the glass/closure interface. Among such synthetic materials can be used Linear Low Density Polyethylene, Polypropylene, Polyolefin and Styrene based elastomers or plastomers such as SEBS, SEPS.

Once the synthetic material has solidified and taken hold on the surfaces of the base of the body, a closure 1 with a synthetic material disc 3 on the base of the body is obtained.

Numerous variations or modifications of detail within the reach of a person skilled in the art can be made to the present embodiments of the invention without departing from the scope of the invention as set forth in the appended claims.

## Claims

1. A bottle closure (1; 100; 200) comprising a body (2; 102; 202) basically cylindrical in shape, made form natural cork and at last one disc-shaped element (3; 103; 203), made from synthetic material, coupled with at last one of the two bases of said body, **characterised in that** said disc-shaped element has a perimetric side edge (30; 130; 203) that surrounds the perimetric side edge of the base of said cork body.

2. The closure according to claim 1, **characterised in that** said synthetic material disc (3; 103; 203) is coupled to the base of said cork body (2; 102; 203) by means of injection moulding.

3. The closure according to claim 3, **characterised in that** said synthetic material disc (3; 103; 203) comprises synthetic material such as Linear Low Density Polyethylene, Polypropylene, Polyolefin and Styrene based elastomers or plastomers such as SEBS, SEPS.

4. The closure according to any of the previous claims, **characterised in that** the surface turned towards the outside (35; 135; 235) of said synthetic material disc (3; 103; 203) is basically flat, slightly concave or, alternatively, convex and has a perimeter edge which is basically smoothed or rounded.

5. The closure according to any of the previous claims, **characterised in that** in at last one base of the cork body (2; 102; 202) there is a housing (20; 120; 220) to allow gripping of said synthetic material disc (3; 103; 203).

6. The closure according to claim 5, **characterised in that** said housing (20; 120; 220) has an ring conformation and it is formed in the peripheral edge of at last one base of cork body (2; 102; 202), so that the base of the cork body has an external diameter which is less compared to the external diameter of the central part thereof.

7. The closure (1; 200) according to claim 6, **characterised in that** said perimetric ring housing (20; 220) provided in the peripheral edge of the base of the cork body (2; 202) is defined between a perimetric tapered profile (21; 221) and a radial profile (22; 222) basically at right angle to the axis of the body (2; 202).

8. The closure (100) according to claim 6, **characterised in that** said perimetric ring housing (120) provided in the peripheral edge of the base of the cork body (102) is defined by a perimetric profile with diameter increasing up to a maximum diameter and then decreasing down to a radial profile (122), so that a annular cavity (121) is defined between the decreasing diameter profile and the radial profile (122).

9. A method for the production of a bottle closure (1; 100; 200) comprising the following steps:
- creation of a body (2; 102; 202) in natural cork with a substantially cylindrical shape, with at last one base of a diameter which is less compared to the central part of said body, and
- injection moulding of at last one synthetic material disc (3; 103; 203) coupled on said at last one base of said cork body, so as to surround sideways and as a perimeter said base of the cork body.

10. The method according to claim 9, **characterised by** comprising a mechanical processing step of said at last one base of the cork body (2; 102; 202) to create an housing (20; 120; 220) for gripping of said synthetic material disc (3; 103; 203).
